# EUROPÄISCHE PATENTSCHRIFT

(11) **EP 0 868 397 B1**
(45) Veröffentlichungstag und Bekanntmachung des Hinweises auf die Patenterteilung: **05.04.2000**
(21) Anmeldenummer: 96944046.0
(22) Anmeldetag: 20.12.1996
(51) Int. Cl.: C01B 21/14

(54) **STABILISIERTE HYDROXYLAMINLÖSUNGEN**
STABILISED HYDROXYLAMINE SOLUTIONS
SOLUTIONS D'HYDROXYLAMINE STABILISEES

(30) Priorität: 20.12.1995 DE 19547759
(43) Veröffentlichungstag der Anmeldung: 07.10.1998
(73) Patentinhaber: BASF AKTIENGESELLSCHAFT, 67056 Ludwigshafen (DE)
(72) Erfinder: SCHNEIDER, Hans-Michael, D-67549 Worms (DE); LEUTNER, Bernd, D-67227 Frankenthal (DE)
(74) Vertreter: Kinzebach, Werner, Dr.
(86) Internationale Anmeldenummer: EP9605771
(87) Internationale Veröffentlichungsnummer: WO9722549

(56) Entgegenhaltungen:
- EP-A- 0 093 536
- GB-A- 1 192 454
- GB-A- 1 420 656
- US-A- 3 145 082

## Beschreibung

Die vorliegende Erfindung betrifft stabilisierte Hydroxylaminlösungen.

Hydroxylamin ist besonders in Form des Schwefelsäuresalzes ein wichtiges Zwischenprodukt für die chemische Industrie, das in großem Umfang bei chemischen Synthesen eingesetzt wird. Häufig ist es erforderlich, Hydroxylamin in Form einer Lösung der freien Base einzusetzen, die im allgemeinen aus einem Hydroxylammoniumsalz, z.B. Hydroxylammoniumsulfat oder Hydroxylammoniumchlorid durch Einwirkung einer geeigneten Base, wie Ammoniak, Natronlauge oder ein Alkoholat, freigesetzt wird. Neutrale und alkalische Hydroxylaminlösungen sind instabil und zersetzen sich zu Ammoniak, Stickstoff, Stickoxiden und Wasser, so daß ihr Transport oder ihre Lagerung sehr problematisch ist. Die Zersetzungsgeschwindigkeit nimmt mit steigender Temperatur, steigendem pH und steigender Konzentration katalytisch wirksamer Verunreinigungen zu.

Um die Zersetzung des Hydroxylamins zu vermeiden, setzt man den Lösungen einen Stabilisator zu. Es sind bereits zahlreiche Hydroxylamin-Stabilisatoren bekannt. So wurden vorgeschlagen: Thioglykolsäure (JP-A-58069843), Glycerinmonoether und Ethylenoxidaddukte davon (DE-A-29 19 554), Hydroxyanthrachinone (DE-A-33 43 600), Hydroxychinoline (DE-A-33 45 734), Polyhydroxyhexano-1,4-lacton (DE-A-33 45 733), Anthocyane (DE-A-33 47 260), Hydroxychinaldine, Flavone, Benzonitril, N-Phenyl-N-hydroxythioharnstoff (DE-A-36 01 803), Flavane (DE-A-33 43 599), Thiosulfate, Mercaptobenzothiazole, Mercaptoalkanole, Mercaptothiazoline, Thiuramdisulfide, Thioharnstoffe (EP-A-516 933), das Tetranatriumsalz der Ethylendiamintetraessigsäure, das Trinatriumsalz der N-Hydroxyethylethylendiaminotriessigsäure, Polyvinylpyrrolidon oder Poly-N-vinyl-5-ethyl-2-oxazolidinon (US-A-3,145,082), Amidoxime (US-A-3,480,391), Hydroxamsäuren (US-3,480,391), Hydroxyharnstoffe (US-3,544,270), Dipyridylverbindungen (JP-A-58069842), Aminochinoline (JP-A- 58069844), Phenanthroline (JP-A-58069841), und Polyhydroxyphenole (JP-A- 4878099).

Keiner der bisher vorgeschlagenen Stabilisatoren war jedoch in der Lage, Hydroxylaminlösungen so ausreichend zu stabilisieren, daß keine nennenswerte Zersetzung des Hydroxylamins, insbesondere bei Lagerung, erfolgte.

Der vorliegenden Erfindung liegt daher die Aufgabe zugrunde, eine bessere Möglichkeit zur Stabilisierung von Hydroxylaminlösungen zu schaffen.
Überraschenderweise wurde nun gefunden, daß diese Aufgabe gelöst wird, wenn man als Stabilisator wenigstens eine Verbindung der Formel I verwendet:

R¹R²N-A-NR³R⁴ (I)

worin
- A: für Alkylen, Alkenylen, Alkinylen, Cycloalkylen, Cycloalkenylen, Arylen, o-, m- oder p-Xylylen, einen 5- oder 6-gliedrigen gesättigten oder ungesättigten Heterocyclus mit einem Stickstoffatom steht, wobei die genannten Reste 1, 2 oder 3 Substituenten aufweisen können, die unabhängig voneinander ausgewählt sind unter Alkyl, Alkoxy oder Hydroxy,
oder für 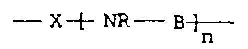 steht, worin
- B und X: für -CH₂CH₂- oder -CH₂CH₂CH₂- stehen,
- n: für 10 - 50 000 steht,
- R: für H, Alkyl, einen durch OH, NH₂, NHCOR⁵ oder COOH substituierten Ethylen- oder Propylenrest, CSSH, CH₂CN oder CH₂PO₃H₂ steht oder eine Brücke zu einem Stickstoffatom einer anderen Polyethylenimin- oder Polypropyleniminkette darstellt, wobei die Brücke durch 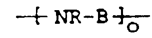 oder 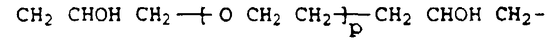 gebildet wird, wobei o und p unabhängig voneinander für 1 - 15 stehen,
- R⁵: für H, C₁-C₁₈-Alkyl oder CHR⁶COR⁶ steht, wobei R⁶ einen C₁₂-C₁₈-Alkylrest bedeutet,
- R¹, R², R³ und R⁴: unabhängig voneinander für H, CH₂COOH, CH₂PO₃H₂, Alkyl, Acyl, CH₂CH₂OH, CH₂CH₂NH₂ oder 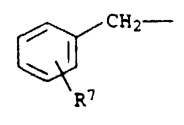 stehen, wobei
- R⁷: für OH, SH, NH₂, CN, COOH, Alkyl oder Alkoxy steht, oder die Salze davon, ausgenommen Ethylendiaminotetraessigsäure und N-Hydroxyethylendiaminotriessigsäure und deren Salze.

Gegenstand der vorliegenden Erfindung sind daher stabilisierte Hydroxylaminlösungen, die Hydroxylamin und wenigstens eine Verbindung der Formel I enthalten.

Die erfindungsgemäßen Lösungen enthalten Hydroxylamin in im wesentlichen reiner Form als freie Base oder als zumindest teilweise neutralisiertes Hydroxylaminsalz, d.h. freies Hydroxylamin liegt im Gemisch mit dem Hydroxylaminsalz vor.

Die erfindungsgemäß zur Anwendung kommenden Stabilisatoren sind zur Stabilisierung aller Arten von Hydroxylaminlösungen brauchbar. Es kann sich um wäßrige Lösungen oder Lösungen von Hydroxylamin in einem organischen Lösungsmittel, wie Methanol, Ethanol, n-Propanol, Isopropanol, Aceton, Tetrahydrofuran etc., oder um Gemische von Wasser und organischen Lösungsmitteln handeln. Die erfindungsgemäß zur Anwendung kommenden Stabilisatoren sind in den Lösungsmitteln, in welchen Hydroxylamin löslich ist, ebenfalls löslich. Gegebenenfalls kann Löslichkeit durch die Wahl geeigneter Gruppen R¹ bis R⁴ und A erzielt werden.

Hydroxylaminlösungen werden im allgemeinen durch Umsetzung eines Hydroxylammoniumsalzes, insbesondere Hydroxylammoniumsulfat, Hydroxylammoniumchlorid und Hydroxylammoniumphosphat, mit einer geeigneten Base, wie Ammoniak, Natriumhydroxid, Kaliumhydroxid oder Calciumhydroxid, gewonnen. Bei vollständiger Neutralisation des Hydroxylammoniumsalzes erhält man eine Lösung, die freies Hydroxylamin und das Salz enthält, das aus dem Basenkation und dem im Hydroxylammoniumsalz vorhandenen Säureanion stammt. Das Salz kann vollständig oder teilweise abgetrennt werden. Das Hydroxylammoniumsalz kann auch nur teilweise mit der Base neutralisiert werden. Man erhält dann eine Lösung, die neben freiem Hydroxylamin und dem erwähnten Salz auch noch unumgesetztes Hydroxylammoniumsalz enthält. Alle diese Lösungen können erfindungsgemäß stabilisiert werden, wobei die Art des Anions im Hydroxylammoniumsalz nicht kritisch ist.

Im Rahmen der vorliegenden Erfindung steht Alkyl für einen geradkettigen oder verzweigten Rest, der vorzugsweise 1 bis 18 Kohlenstoffatome, insbesondere 1 bis 6 Kohlenstoffatome und insbesondere 1 bis 4 Kohlenstoffatome aufweist. Für die Alkylgruppe in Alkoxy gilt entsprechendes.

Alkylen steht für einen geradkettigen oder verzweigten divalenten Rest, der vorzugsweise 2 bis 6 und insbesondere 2 bis 4 Kohlenstoffatome aufweist.

Alkenylen und Alkinylen stehen für geradkettige oder verzweigte, divalente Reste, die vorzugsweise 3 bis 6 Kohlenstoffatome und insbesondere 3 oder 4 Kohlenstoffatome aufweisen.

Cycloalkylen und Cycloalkenylen stehen vorzugsweise für Cyclopentylen oder Cyclohexylen bzw. für Cyclopentenylen oder Cyclohexenylen.

Arylen steht vorzugsweise für einen aromatischen C₆-C₁₀-Kohlenwasserstoffrest und für Phenylen.

Bei dem gesättigten oder ungesättigten Heterocyclus handelt es sich vorzugsweise um einen Pyrrolidinylen-, Piperidinylen-, Pyrrolylen- oder Pyridinylenrest. Der Heterocyclus ist über Kohlenstoffatome an die beiden Stickstoffatome der Formel I gebunden.

Acyl steht für einen geradkettigen oder verzweigten Rest, der vorzugsweise 1 bis 19 Kohlenstoffatome aufweist.
- A: steht vorzusweise für Alkylen, Cycloalkylen, Arylen oder 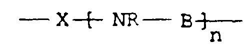 und insbesondere für Alkylen, Cycloalkylen oder

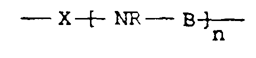

Die Reste R¹ bis R⁴ stehen dann unabhängig voneinander, vorzugsweise für CH₂COOH, CH₂CH₂OH, CH₂CH₂NH₂ oder 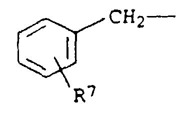 und insbesondere für CH₂COOH oder 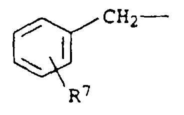
- R⁷: steht vorzugsweise in o-Position und bedeutet insbesondere OH, COOH oder einen verzweigten (sperrigen) Alkylrest, wie Isopropyl, t-Butyl etc.

Die erfindungsgemäßen Stabilisatoren können auch als Salz zur Anwendung kommen. Geeignete Salze sind insbesondere Alkalimetallsalze, wie Natrium- oder Kaliumsalze oder Ammoniumsalze, wenn saure Funktionen vorhanden sind, einschließlich der Salze mit Aminen, wie Triethylamin oder Triethanolamin und mit Hydroxylamin. Letztere entstehen gegebenenfalls bei Einbringen der Verbindungen der Formel I in die zu stabilisierende Hydroxylaminlösung. Geeignet sind auch Säureadditionssalze mit anorganischen Säuren, wie HF, HCl, HBr, H₂SO₄, H₃PO₄ etc, wenn basische Funktionen vorhanden sind.

Eine weitere bevorzugte Ausführungsform ist eine stabilisierte Lösung, die als Stabilisator eine Verbindung der Formel I enthält, worin A für Alkylen oder Cycloalkylen steht und R¹ bis R⁴ unabhängig voneinander für CH₂COOH, CH₂CH₂OH oder 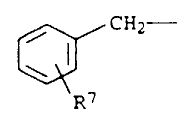 stehen, wobei R⁷ die oben angegebenen Bedeutungen besitzt und insbesondere für OH, SH oder NH₂ steht.

Wenn A für 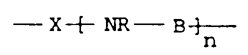 steht, handelt es sich bei den Verbindungen der Formel I um Polyethylenimin- oder Polypropylen-iminpolymere, die im allgemeinen schwach vernetzt sind. Die sich wiederholenden Einheiten der genannten Formel können dabei gleich oder verschieden sein. Dies gilt vor allem dann, wenn Einheiten vorhanden sind, die am Stickstoffatom substituiert sind, d.h. R ist zumindest in einem Teil der Einheiten von Wasserstoff verschieden. Der Substitutionsgrad kann in einem weiten Bereich gewählt werden und liegt im allgemeinen im Bereich von 5 bis 98 %. Die durch die Herstellung der Polyethylen- und Polypropylenimine bedingte leichte Vernetzung kann durch Polyetherbrücken zwischen den Polymeren erhöht werden. Die Polyetherbrücke wird gebildet durch Alkylierung eines Teils der Stickstoffatome mit Epichlorhydrin und anschließende Ethoxylierung.

Die Reste R¹ bis R⁴ stehen im Falle der Polyethylen- oder Polypropyleniminpolymeren, vorzugsweise für H oder Alkyl.

Das gewichtsmittlere Molekulargewicht der Polymere kann in einem weiten Bereich gewählt werden, es liegt im allgemeinen im Bereich von 800 bis 2,000,000, insbesondere 1000 bis 1,500,000 und bei höher vernetzten Polymeren im Bereich von 50000 bis 2,000,000.

Gemäß einer weiteren bevorzugten Ausführungsform enthält die stabilisierte Hydroxylaminlösung wenigstens eine Verbindung der Formel I, worin A für 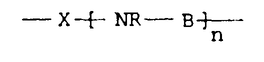 steht, B und X für CH₂CH₂- stehen, R für CH₂COOH, CH₂CH₂COOH, CH₂CH₂OH, CH₂CH₂NH₂, NHCOR⁵ oder CSSH steht oder eine wie oben definierte Brücke darstellt, R⁵ die oben angegebenen Bedeutungen besitzt und R¹ bis R⁴ für H oder Alkyl stehen.

Besonders bevorzugt handelt es sich dabei um:
schwach vernetztes Polyethylenimin mit einem mittleren Molekulargewicht im Bereich von 1000 bis 2 000 000;
carboxymethylierte Polyethylenimine mit einem Substitutionsgrad im Bereich von 25 bis 98 % und einem mittleren Molekulargewicht, das im Bereich von 1500 bis 1,500,000 liegt;
carboxyethylierte Polyethylenimine mit einem Substitutionsgrad im Bereich von 5 bis 50 % und einem mittleren Molekulargewicht, das im Bereich von 1000 bis 1,500,000 liegt;
teilamidierte Polyethylenimine (einer oder zwei der Reste R¹ bis R⁴ stehen für C₁ bis C₁₉ Acyl) mit einem Substitutionsgrad im Bereich von 5 bis 50% und einem mittleren Molekulargewicht, das im Bereich von 1000 bis 1,500,000 liegt;
polyethervernetzte Polyethylenimine mit einem mittleren Molekulargewicht, das im Bereich von 50000 bis 1,500,000 liegt;
hydrophob modifizierte Polyethylenimine (R = CH₂CH₂NHCOR⁵, wobei R⁵ für CHR⁶COR⁶ steht und R⁶ für C₁₂ bis C₁₈-Alkyl, insbesondere Hexadecyl steht) mit einem Substitutionsgrad im Bereich von 1 bis 7 % und einem mittleren Molekulargewicht, das im Bereich von 1500 bis 1,500,00 liegt. Diese Polymere sind erhältlich durch Umsetzung der entsprechenden Ethylenimine (R = CH₂CH₂NH₂) mit den entsprechenden Alkyldiketenen;
Hydroxyethyl-substituierte Polyethylenimine mit einem Substitutionsgrad von 80 bis 100 % und einem mittleren Molekulargewicht, das im Bereich von 1 bis 2,000,000 liegt;
Polyethylenimindithiocarbamate (R = CSSH) mit einem Substitutionsgrad von 30 bis 60 % und einem mittleren Molekulargewicht von 2000 bis 1,000,000, sowie die Natriumsalze davon.

Die obigen Polyethylenimine sind zum Teil im Handel erhältlich, sie werden z.B. von der BASF AG unter der Bezeichnung LUPASOL® vertrieben.

Gemäß einer weiteren bevorzugten Ausführungsform enthält die stabilisierte Hydroxylaminlösung als Stabilisator eine Verbindung der Formel I, worin A für Cyclohexylen oder -CH₂CH₂- steht, R¹ bis R⁴ für CH₂COOH oder 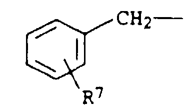 vorzugsweise für CH₂COOH stehen, wobei R⁷ für OH, SH, NH₂ oder COOH steht.

Besonders bevorzugt handelt es sich dabei um trans-1,2-Diaminocyclohexan-N,N,N',N'-tetraessigsäure und/oder N,N'-Di(2-Hydroxybenzyl)-ethylendiamin-N,N'-diessigsäure sowie die Salze davon. Die Verbindungen der Formel I sind bekannt und im Handel erhältlich oder können analog nach bekannten Verfahren hergestellt werden.

Die erfindungsgemäßen stabilisierten Hydroxylaminlösungen enthalten die Verbindungen der Formel I in einer zur Stabilisierung ausreichenden Menge. Vorzugsweise enthalten sie 0,001 bis 20 Gew.-% (10 bis 200 000 ppm), insbesondere 0.001 bis 10 Gew.-%, besonders bevorzugt 0,01 bis 5 Gew.-%, ganz besonders bevorzugt 0,02 - 2 Gew.-% Verbindung der Formel I, bezogen auf den Hydroxylamingehalt. Die Hydroxylaminkonzentration beträgt im allgemeinen 1 - 100 Gew.-%, insbesondere 1 bis 70 Gew.-%, bezogen auf das Gesamtgewicht der Lösung.

Der Stabilisator kann vor oder nach Neutralisation des Hydroxylaminsalzes, bevorzugt aber vor der Neutralisation, zugesetzt werden.

Die Verbindungen der Formel I sind in einem weiten Temperaturbereich wirksam. So stabilisieren sie Hydroxylaminlösungen im Bereich von -20°C bis 130°C, vorzugsweise bei -10°C - 100°C. Sie sind aber auch bei deutlich höheren Temperaturen unter den zur Verflüssigung der Lösung erforderlichen Drucken als Stabilisator geeignet.

Die nachfolgenden Beispiele erläutern die Erfindung, ohne sie zu begrenzen. Die im Rahmen der Beispiele vorgenommene Bestimmung der Hydroxylaminkonzentrationen erfolgt durch Redoxtitration.

### Beispiele:

In einem 50 ml Rundkolben aus Glas wurden jeweils 20 ml 50%-ige wäßrige Hydroxylaminlösung vorgelegt und mit 500 ppm (m/m) Stabilisator der Formel I, bezogen auf die Masse an Hydroxylamin, versetzt. Der Rundkolben wurde auf Raumtemperatur gehalten, bzw. mit einem Ölbad auf 100°C erwärmt und bei dieser Temperatur gehalten. Die Hydroxylamingehalte der stabilisierten Lösungen bei Raumtemperatur und 100°C wurden nach definierten Zeiten durch Redoxtitration bestimmt. Dazu wurden aus den Lösungen definierte Probenmengen gezogen, mit einem Überschuß an schwefelsaurer Ammoniumeisen(III)-salzlösung 5 Minuten gekocht und das gebildete Eisen(II)-salz mit Cer(IV)-salzlösung zurücktitriert. Der Umschlagspunkt wurde potentiometrisch bestimmt.

Tabelle 1 gibt die Ergebnisse bei Raumtemperatur, Tabelle 2 bei 100°C wieder. Um die hervorragende stabilisierende Wirkung der Verbindungen nach Formel I auf Hydroxylaminlösungen zu zeigen, werden zum Vergleich Messungen mit nicht stabilisierten und mit Ethylendiamintetraessigsäure (EDTA) stabilisierten Hydroxylaminlösungen aufgeführt.

**Tabelle 1**

| Raumtemperatur | | |
|---|---|---|
| Verbindung | Zeit [d] | Hydroxylamingehalt [%] |
| Polyethylenimin (unsubstituiert, verzweigt, MG ∼800 | 27 | 48,1 |
| | | |
| Polyethylenimin (carboxyethyliert, verzweigt, MG ∼1000 | 30 | 47,7 |
| | | |
| Polyethylenimin (carboxyethyliert, verzweigt, MG∼1 Mio. | 30 | 48,4 |
| | | |
| N,N'-Di(2-hydroxybenzyl)ethylendiamin-N,N'-diessigsäure | 29 | 45,4 |
| | | |
| Trans-1,2-diaminocyclohexan-N,N,N',N'-tetraessigsäure | 31 | 48.6 |
| | | |
| unstabilisiert | 31 | 38,0 |
| | | |
| EDTA | 30 | 17 |
| MG = Molekulargewicht | | |

**Tabelle 2**

| 100°C | | |
|---|---|---|
| Verbindung | Zeit [h] | Hydroxylamingehalt [%] |
| Polyethylenimin (unsubstituiert, verzweigt, MG ∼800 | 6 | 47,8 |
| | | |
| Polyethylenimin (amidiert, verzweigt, MG ∼4000 | 6 | 47,0 |
| | | |
| Polyethylenimin (carboxyethyliert, verzweigt, MG∼1000 | 6 | 49,5 |
| | | |
| Polyethylenimin (carboxyethyliert, verzweigt, M∼1 Mio | 6 | 48,5 |
| | | |
| Trans-1,2-diaminocyclohexan-N,N,N',N'-tetraessigsäure | 6 | 49,9 |
| | | |
| unstabilisiert | 6 | 38,5 |
| | | |
| EDTA | 6 | 20 |

Es ist ersichtlich, daß die Hydroxylaminkonzentration der nicht stabilisierten Proben deutlich abgenommen hat. Die Konzentration der mit dem bekannten Stabilisator EDTA versetzten Proben hat sogar noch stärker abgenommen als die der nicht stabilisierten Proben. Im Gegensatz dazu hat die Konzentration der erfindungsgemäß stabilisierten Proben nur geringfügig abgenommen.

## Patentansprüche

1. Stabilisierte Hydroxylaminlösung, die als Stabilisator wenigstens eine Verbindung der Formel I
R¹R²N-A-NR³R⁴ (I)
worin
A für Alkylen, Alkenylen, Alkinylen, Cycloalkylen, Cycloalkenylen, Arylen, o-, m- oder p-Xylylen, einen 5- oder 6-gliedrigen gesättigten oder ungesättigten Heterocyclus mit einem Stickstoffatom steht, wobei die genannten Reste 1, 2 oder 3 Substituenten aufweisen können, die unabhängig voneinander ausgewählt sind unter Alkyl, Alkoxy oder Hydroxy,
oder für 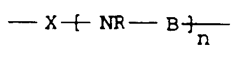 steht, worin
B und X für - CH₂CH₂- oder -CH₂CH₂CH₂- stehen,
n für 10 - 50 000 steht,
R für H, Alkyl, einen durch OH, NH₂, NHCOR⁵ oder COOH substituierten Ethylen- oder Propylenrest, CSSH, CH₂CN oder CH₂PO₃H₂ steht oder eine Brücke zu einem Stickstoffatom einer anderen Polyethylenimin- oder Polypropyleniminkette darstellt, wobei die Brücke durch 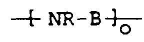 oder 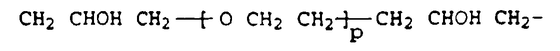 gebildet wird, wobei o und p unabhängig voneinander für 1 - 15 stehen,
R⁵ für H, C₁-C₁₈-Alkyl oder CHR⁶COR⁶ steht, wobei R⁶ einen C₁₂-C₁₈-Alkylrest bedeutet,
R¹, R², R³ und R⁴ unabhängig voneinander für H, CH₂COOH, CH₂PO₃H₂, Alkyl, Acyl, CH₂CH₂OH, CH₂CH₂NH₂ oder 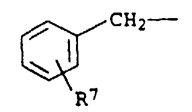 stehen, wobei
R⁷ für OH, SH, NH₂, CN, COOH, Alkyl oder Alkoxy steht, oder die Salze davon enthält,
ausgenommen Ethylendiaminotetraessigsäure und N-Hydroxyethylendiaminotriessigsäure und deren Salze.

2. Stabilisierte Hydroxylaminlösung nach Anspruch 1, die als Stabilisator wenigstens eine Verbindung der Formel I oder ein Salz davon enthält, in welcher A für Alkylen, Alkenylen, Cycloalkylen, Arylen oder 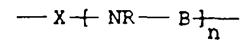 steht, B und X für -CH₂CH₂- stehen und n, R, und R¹ bis R⁴ die in Anspruch 1 angegebenen Bedeutungen besitzen.

3. Stabilisierte Hydroxylaminlösung nach Anspruch 2, die als Stabilisator wenigstens eine Verbindung der Formel I oder ein Salz davon enthält, in welcher A für Alkylen, Cycloalkylen oder 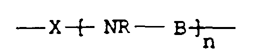 steht, und B, X, n, R¹ bis R⁴ die in Anspruch 2 angegebenen Bedeutungen besitzen.

4. Stabilisierte Hydroxylaminlösung nach Anspruch 1, die als Stabilisator wenigstens eine Verbindung der Formel I oder ein Salz davon enthält, in welcher A für Alkylen oder Cycloalkylen steht und R¹ bis R⁴ unabhängig voneinander für CH₂COOH, CH₂PO₃H₂ oder 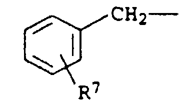 stehen, wobei R⁷ die in Anspruch 1 angegebenen Bedeutungen besitzt.

5. Stabilisierte Hydroxylaminlösung nach Anspruch 4, die als Stabilisator wenigstens eine Verbindung der Formel I oder ein Salz davon enthält, in welcher A für Cyclohexylen oder -CH₂CH₂- steht, R¹ bis R⁴ unabhängig voneinander für CH₂COOH oder 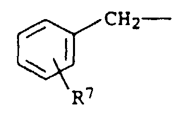 stehen, wobei R⁷ für OH, SH, NH₂ oder COOH steht.

6. Stabilisierte Hydroxylaminlösung nach Anspruch 5, die als Stabilisator trans-1,2-Diaminocyclohexan-N,N,N',N'-tetraessigsäure und/oder N,N'-Di(2-hydroxybenzyl)-ethylendiamin-N,N'-diessigsäure enthält.

7. Stabilisierte Hydroxylaminlösung nach Anspruch 1, die als Stabilisator wenigstens eine Verbindung der Formel I oder ein Salz davon enthält, in welcher A für 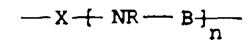 steht,
B und X für -CH₂CH₂- stehen,
n für 10 bis 50 000 steht,
R für CH₂COOH, CH₂CH₂COOH, CH₂CH₂OH, CH₂CH₂NH₂, NHCOR⁵ oder CSSH steht oder eine wie in Anspruch 1 definierte Brücke zu einem Stickstoffatom einer anderen Polyethylenimin- oder Polypropyleniminkette darstellt,
R⁵ die in Anspruch 1 angegebenen Bedeutungen besitzt und R¹ bis R⁴ unabhängig voneinander für H, Alkyl oder C₁-C₁₉-Acyl stehen.

8. Stabilisierte Hydroxylaminlösung nach einem der vorhergehenden Ansprüche, die als Stabilisator das Hydroxylaminsalz einer Verbindung der Formel I, die saure Gruppen aufweist, enthält.

9. Stabilisierte Hydroxylaminlösung nach einem der vorhergehenden Ansprüche, die 0,001 bis 20 Gew.-%, insbesondere 0,001-10 Gew.-%, vorzugsweise 0,01 bis 5 Gew.-%, besonders bevorzugt 0,02 bis 2 Gew.-% Stabilisator, bezogen auf Hydroxylamin, enthält.

10. Stabilisierte Hydroxylaminlösung, die dadurch erhältlich ist, daß man ir eine Hydroxylaminlösung als Stabilisator wenigstens eine Verbindung der Formel I, wie in einem der Ansprüche 1 bis 8 definiert, gibt.

11. Verwendung wenigstens einer wie in einem der Ansprüche 1 bis 8 definierten Verbindung zur Stabilisierung von Hydroxylaminlösungen.

12. Verfahren zur Stabilisierung von Hydroxylaminlösungen, dadurch gekennzeichnet, daß man wenigstens eine Verbindung der Formel I, wie in einem der Ansprüche 1 bis 8 definiert, in eine zu stabilisierende Hydroxylaminlösung gibt.

## Claims

1. A stabilized hydroxylamine solution which comprises as stabilizer at least one compound of the formula I
R¹R²N-A-NR³R⁴ (I)
in which
A is alkylene, alkenylene, alkynylene, cycloalkylene, cycloalkenylene, arylene, o-, m- or p-xylylene, a 5- or 6-membered saturated or unsaturated heterocycle having a nitrogen atom, said radicals being able to contain 1, 2 or 3 substituents which are selected independently of one another from alkyl, alkoxy or hydroxyl,
or is 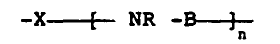
in which
B and X are -CH₂CH₂- or -CH₂CH₂CH₂-,
n is 10 - 50,000,
R is H, alkyl, ethylene or propylene which is substituted by OH, NH₂, NHCOR⁵ or COOH, or is CSSH, CH₂CN or CH₂PO₃H₂, or is a bridge to a nitrogen atom of another polyethyleneimine or polypropyleneimine chain, the bridge being formed by 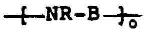 or 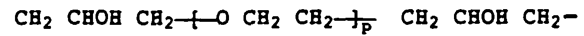 where o and p independently of one another are 1 - 15,
R⁵ is H, C₁-C₁₈-alkyl or
CHR⁶COR⁶ where R⁶ is C₁₂-C₁₈-alkyl,
R¹, R², R³ and R⁴ independently of one another are H, CH₂COOH, CH₂PO₃H₂, alkyl, acyl, CH₂CH₂OH, CH₂CH₂NH₂ or 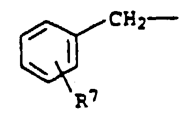
where
R⁷ is OH, SH, NH₂, CN, COOH, alkyl or alkoxy,
or the salts thereof, with the exceptions of ethylenediaminetetraacetic acid and N-hydroxyethylenediaminetriacetic acid and salts thereof.

2. A stabilized hydroxylamine solution as claimed in claim 1, wherein the stabilizer is at least one compound of the formula I or a salt thereof in which A is alkylene, alkenylene, cycloalkylene, arylene or 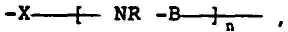 B and X are -CH₂CH₂- and n, R, and R¹ to R⁴ are as defined in claim 1.

3. A stabilized hydroxylamine solution as claimed in claim 2, wherein the stabilizer is at least one compound of the formula I or a salt thereof in which A is alkylene, cycloalkylene or 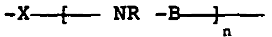 and B, X, n and R¹ to R⁴ are as defined in claim 2.

4. A stabilized hydroxylamine solution as claimed in claim 1, wherein the stabilizer is at least one compound of the formula I or a salt thereof in which A is alkylene or cycloalkylene and R¹ to R⁴ independently of one another are CH₂COOH, CH₂PO₃H₂ or 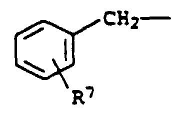 where R⁷ is as defined in claim 1.

5. A stabilized hydroxylamine solution as claimed in claim 4, wherein the stabilizer is at least one compound of the formula I or a salt thereof in which A is cyclohexylene or -CH₂CH₂- and R¹ to R⁴ independently of one another are CH₂COOH or 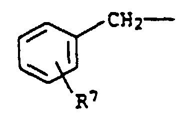 where R⁷ is OH, SH, NH₂ or COOH.

6. A stabilized hydroxylamine solution as claimed in claim 5, wherein the stabilizer is trans-1,2-diaminocyclohexane-N,N,N',N'-tetraacetic acid and/or N,N'-di(2-hydroxybenzyl)ethylenediamine-N,N'-diacetic acid.

7. A stabilized hydroxylamine solution as claimed in claim 1, wherein the stabilizer is at least one compound of the formula I or a salt thereof in which A is 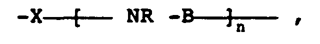
B and X are -CH₂CH₂-,
n is 10 to 50,000,
R is CH₂COOH, CH₂CH₂COOH, CH₂CH₂OH, CH₂CH₂NH₂, NHCOR⁵ or CSSH or is a bridge as defined in claim 1 to a nitrogen atom of another polyethyleneimine or polypropyleneimine chain,
R⁵ is as defined in claim 1 and
R¹ to R⁴ independently of one another are H, alkyl or C₁-C₁₉-acyl.

8. A stabilized hydroxylamine solution as claimed in any of the preceding claims, wherein the stabilizer is the hydroxylamine salt of a compound of the formula I which contains acidic groups.

9. A stabilized hydroxylamine solution as claimed in any of the preceding claims, which contains 0.001 - 20 % by weight, in particular 0.001 - 10 % by weight, preferably 0.01 - 5 % by weight, particularly preferably 0.02 - 2 % by weight, of stabilizer, based on hydroxylamine.

10. A stabilized hydroxylamine solution which is obtainable by adding at least one compound of the formula I as defined in any of claims 1 to 8 as stabilizer to a hydroxylamine solution.

11. The use of at least one compound as defined in any of claims 1 to 8 for stabilizing hydroxylamine solutions.

12. A process for stabilizing hydroxylamine solutions, which comprises adding at least one compound of the formula I as defined in any of claims 1 to 8 to a hydroxylamine solution which is to be stabilized.

## Revendications

1. Solution d'hydroxylamine stabilisée, qui contient comme stabilisant au moins un composé de formule I
R¹R²N-A-NR³R⁴ (I)
où
A désigne un groupe alkylène, alcénylène, alcynylène, cycloalkylène, cycloalcénylène, arylène, o-, m- ou p-xylylène, un hétérocycle saturé ou insaturé à 5 ou 6 chaînons ayant un atome d'azote, tandis que les restes mentionnés peuvent présenter 1, 2 ou 3 susbstituants qui sont choisis indépendamment l'un de l'autre parmi les groupes alkyle, alcoxy ou hydroxy,
ou 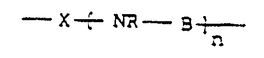 où
B et X représentent -CH₂CH₂- ou -CH₂CH₂CH₂-,
n vaut de 10 à 50 000,
R représente H, un alkyle, un reste éthylène ou propylène susbstitué par un groupe OH, NH₂, NHCOR⁵ ou COOH, ou un reste CSSH, CH₂CN ou CH₂PO₃H₂, ou un pont avec un atome d'azote d'une autre chaîne polyéthylèneimine ou polypropylèneimine, tandis que le pont est formé de 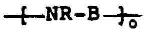 ou 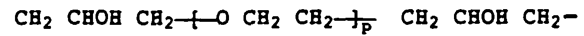 tandis que o et p valent indépendamment l'un de l'autre de 1 à 15,
R⁵ désigne un groupe H, alkyle en C₁-C₁₈ ou CHR⁶COR⁶, R⁶ représentant un reste alkyle en C₁₂-C₁₈,
R^{1,} R², R³ et R⁴ désignent indépendamment l'un de l'autre un groupe H, CH₂COOH, CH₂PO₃H₂, alkyle, acyle, CH₂CH₂OH, CH₂CH₂NH₂ ou 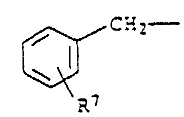
tandis que
R⁷ représente un groupe OH, SH, NH₂, CN, COOH, alkyle ou alcoxy,
ou leurs sels,
à l'exception de l'acide éthylènediaminotétraacétique et de l'acide N-hydroxyéthylènediaminotriacétique et de leurs sels.

2. Solution d'hydroxylamine stabilisée selon la revendication 1, qui contient comme stabilisant au moins un composé de formule I ou un sel de celui-ci, dans laquelle A représente un groupe alkylène, alcénylène, cycloalkylène, arylène ou 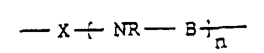 B et X sont -CH₂CH₂- et n, R, et R¹ à R⁴ ont les significations indiquées dans la revendication 1.

3. Solution d'hydroxylamine stabilisée selon la revendication 2, qui contient comme stabilisant au moins un composé de formule I ou un sel de celui-ci, dans laquelle A représente un groupe alkylène, cycloalkylène ou 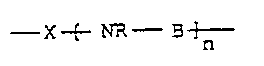 et B, X, n, R¹ à R⁴ ont les significations indiquées dans la revendication 2.

4. Solution d'hydroxylamine stabilisée selon la revendication 1, qui contient comme stabilisant au moins un composé de formule I ou un sel de celui-ci, dans laquelle A représente un groupe alkylène ou cycloalkylène et R¹ à R⁴ sont indépendamment l'un de l'autre des groupes CH₂COOH, CH₂PO₃H₂ ou 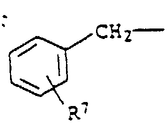 tandis que R⁷ a les significations indiquées dans la revendication 1.

5. Solution d'hydroxylamine stabilisée selon la revendication 4, contenant comme stabilisant au moins un composé de formule I ou un sel de celui-ci, dans laquelle A représente un groupe cyclohexylène ou -CH₂CH₂-, R¹ à R⁴ sont indépendamment l'un de l'autre un groupe CH₂COOH ou 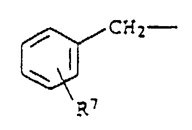 tandis que R⁷ désigne un groupe OH, SH, NH₂ ou COOH.

6. Solution d'hydroxylamine stabilisée selon la revendication 5, qui contient comme stabilisant de l'acide trans-1,2-diaminocyclohexane-N,N,N',N'-tétraacétique et/ou de l'acide N,N'-di(2-hydroxybenzyl)-éthylènediamine-N,N'-diacétique.

7. Solution d'hydroxylamine stabilisée selon la revendication 1, contenant comme stabilisant au moins un composé de formule I ou un sel de celui-ci, dans laquelle A désigne 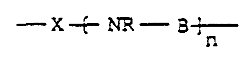
B et X sont -CH₂CH₂-,
n vaut de 10 à 50 000,
R représente un groupe CH₂COOH, CH₂CH₂COOH, CH₂CH₂OH, CH₂CH₂NH₂, NHCOR⁵ ou CSSH ou un pont tel que défini dans la revendication 1, avec un atome d'azote d'une autre chaîne polyéthylèneimine ou polypropylèneimine,
R⁵ a les significations indiquées dans la revendication 1 et
R¹ à R⁴ sont indépendamment l'un de l'autre un groupe H, alkyle ou acyle en C₁-C₁₉.

8. Solution d'hydroxylamine stabilisée selon l'une des revendications précédentes, qui contient comme stabilisant le sel d'hydroxylamine d'un composé de formule I qui présente des groupes acides.

9. Solution d'hydroxylamine stabilisée selon l'une des revendications précédentes, qui contient de 0,001 à 20% en poids, en particulier de 0,001 à 10% en poids, avantageusement de 0,01 à 5% en poids, et plus particulièrement encore de 0,02 à 2% en poids de stabilisant, par rapport à l'hydroxylamine.

10. Solution d'hydroxylamine stabilisée que l'on peut obtenir en introduisant dans une solution d'hydroxylamine, en tant que stabilisant, au moins un composé de formule I, tel que défini dans les revendications 1 à 8.

11. Utilisation d'au moins un composé tel que défini dans les revendications 1 à 8 pour la stabilisation de solutions d'hydroxylamine.

12. Procédé pour la stabilisation de solutions d'hydroxylamine, caractérisé par le fait qu'on introduit au moins un composé de formule I, tel que défini dans les revendications 1 à 8, dans une solution d'hydroxylamine à stabiliser.
